# EUROPEAN PATENT APPLICATION

(11) **EP 2 747 412 A2**
(43) Date of publication of application: **25.06.2014**
(21) Application number: 13198534.3
(22) Date of filing: 19.12.2013
(51) Int. Cl.: H04N 5/225, H04N 5/232, G02B 27/02, H04N 1/00

(54) **Magnification system**

(30) Priority: 21.12.2012 US 201213724896
(71) Applicant: Technologies HumanWare Inc., Longueuil QC J4H 3V7 (CA)
(72) Inventor: Hamel, Pierre, VERDUN, H3E 1X1 (CA); Julien, Martin, BROSSARD, J4X 1T5 (CA); Bourque, Georges, MONTREAL, H1W 2W9 (CA); Sicard, Stéphane, MONTREAL, H4A 2H6 (CA); Boutrouille, François, ST-LAMBERT, J4R 2P8 (CA); Pepin, Gilles, DRUMMONDVILLE, J2C 7E5 (CA); Boisjoli, Yves, DRUMMONDVILLE, J2C 1H7 (CA); Blanchette, Luc, MONTREAL, H3M 1W3 (CA); Auclair, Carle, LA PRAIRIE, J5R 5T6 (CA)
(74) Representative: Tischner, Oliver

(57) **Abstract**

A magnification system which allows viewing a magnified representation of an object is provided. The magnification system includes two main components: a handheld device and a base station. The handheld device is provided with a camera module, a processing unit and, optionally, a display unit. The base station has a frame structure and, optionally, a monitor. The frame structure includes a cradle for receiving the handheld device. The handheld device can function as a stand-alone device and can be carried around for use outside of the home or office or, generally, away from the base station, or it can be mounted on the base station where images of documents or other objects disposed on a workspace of the frame structure can be acquired by the camera module of the handheld device and shown on the monitor through the processing unit.

## Description

### FIELD OF THE INVENTION

The present invention generally relates to devices for low-vision individuals and more particularly concerns a modular magnification system including a handheld device and a base station.

### BACKGROUND

Loss of visual acuity is a growing concern worldwide. The World Health Organization currently estimates to 2.5% the incidence of low vision in industrialized countries and this figure is expected to continue to increase with ageing population. Low vision may be generally referred to as a condition where ordinary eye glasses, lens implants or contact lenses are not sufficient for providing sharp sight. The largest growing segment of the low-vision population in developed countries is expected to be people aged 65 years old and older, which most notably due to age-related eye diseases such as macular degeneration, glaucoma and diabetic retinopathy, cataract, detached retina, and retinitis pigmentosa. Some people are also born with low vision.

Low-vision individuals often find it difficult, if not impossible, to read small writing or to discern small objects without high levels of magnification. This limits their ability to lead an independent life because reading glasses and magnifying glass typically cannot provide sufficient magnification for them. In order to assist low-vision individuals in performing daily tasks, various magnification devices and systems are known in the art and may be broadly classified into one of two categories: desktop and portable video magnifiers.

On the one hand, desktop video magnifiers generally include a video monitor mounted on a stand having a gooseneck shape. A camera having a large optical zoom is installed on the stand over a working area on which a user disposes an object to be magnified, which is typically a document the user wishes to read. The camera feeds a video processor with a video signal of the working area, and the video processor in turn feeds this video signal with an increased sharpness and enhanced contrast to the video monitor. The document is typically disposed on an XY translation table assembled on rails, allowing the user to freely move the XY table and the document thereon to bring different portions of the document within the field of view of the camera.

On the other hand, portable or handheld video magnifiers are devices that are small enough to be easily carried by a user in a pocket or purse. Such devices may typically include a video camera on one side and a small built-in LCD display on the other side. Portable video magnifiers typically include a video processor providing sharpness enhancement, enhanced contrast modes and digital magnification.

In spite of available devices, there remains a need for an improved magnification system for low vision users.

### SUMMARY

In accordance with one aspect of the invention, there is provided a magnification system. The magnification system includes:
- a handheld device including:
   o a camera module having a field of view and a working range, the camera module being adapted to acquire an image of an object within the field of view and working range; and
   o a processing unit for generating a magnified representation of the object based on the image thereof acquired by the camera module; and
- a base station including a frame structure defining a workspace and comprising a cradle for removably received therein the handheld device, the cradle being positioned and configured so that the workspace is within the field of view and the working range of the camera module when the handheld device is received in the cradle.

Optionally, the handheld device and the base station may respectively include a display unit and a monitor for displaying the magnified representation of the object generated by the processing unit.

Advantageously, embodiments of the present invention provide a modular magnification system. On the one hand, the handheld device may be used as a stand-alone device for acquiring images of objects, and generating and optionally displaying magnified representations based on these images. On the other hand, the handheld device may be mounted on the base station for acquiring images of objects disposed on the workspace, so that the magnification system may be used to display, via a monitor provided with the base station, the magnified representation of the object generated by the handheld device.

Features and advantages of the invention will be better understood upon reading of preferred embodiments thereof with reference to the appended drawings.

### BRIEF DESCRIPTION OF THE DRAWINGS

FIG. 1A is a perspective exploded side view of a magnification system according to an embodiment of the invention; FIG. 1B is a perspective side view of the magnification system of FIG. 1A, where the handheld device is mounted on a base station.
FIG. 2 is a perspective view of a handheld device in accordance with an embodiment of the invention, wherein the display face of the handheld device is shown.
FIG. 3 is a perspective view of the handheld device of FIG. 2 showing the camera face thereof.
FIG. 4 is a schematic functional block diagram of a handheld device in accordance with an embodiment of the present invention.
FIG. 5 is a side view of a base station in accordance with an embodiment of the present invention.
FIG. 6 is a front view of the base station of the magnification system of FIG. 1A.
FIG. 7 is a top view of the bottom platform of the base station of FIG. 6.
FIG. 8 is a perspective view of the cradle for removably receiving the handheld device in the magnification system of FIG. 1A.
FIG. 9 is a perspective view of a monitor support used in the magnification system of FIG. 1A.
FIGs. 10A to 10C are perspective views of a magnification system according to other embodiments of the invention, wherein the magnification system is connected to an external monitor (FIGs. 10A and 10B) and wherein the frame structure forms an open area below the cradle defining the workspace (FIGs. 10B and 10C).
FIG. 11 is a perspective view from below of the magnification system of FIG. 1A showing the lighting assembly of the frame structure.

### DESCRIPTION OF PREFERRED EMBODIMENTS

In accordance with one aspect of the invention, there is provided a magnification system which allows viewing a magnified representation of an object.

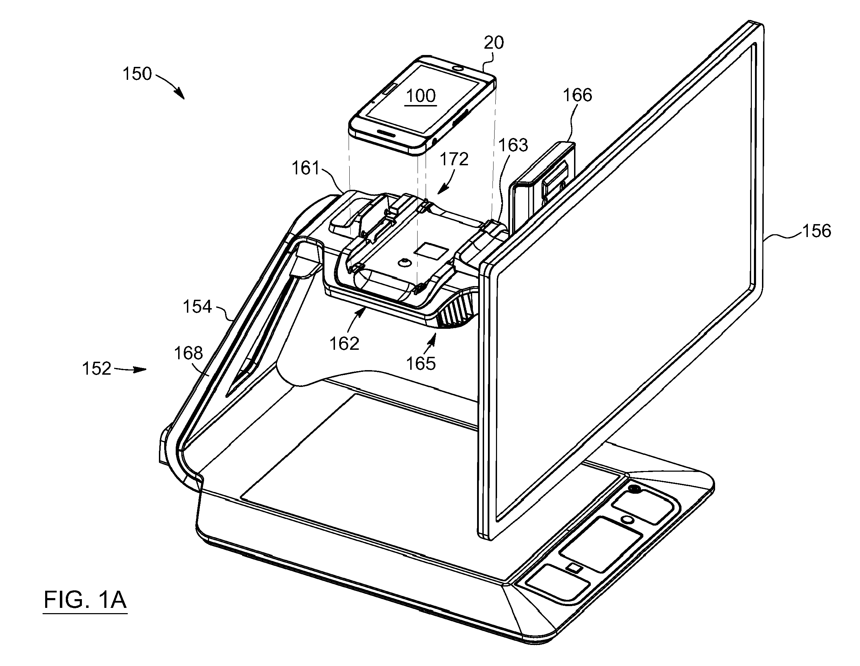

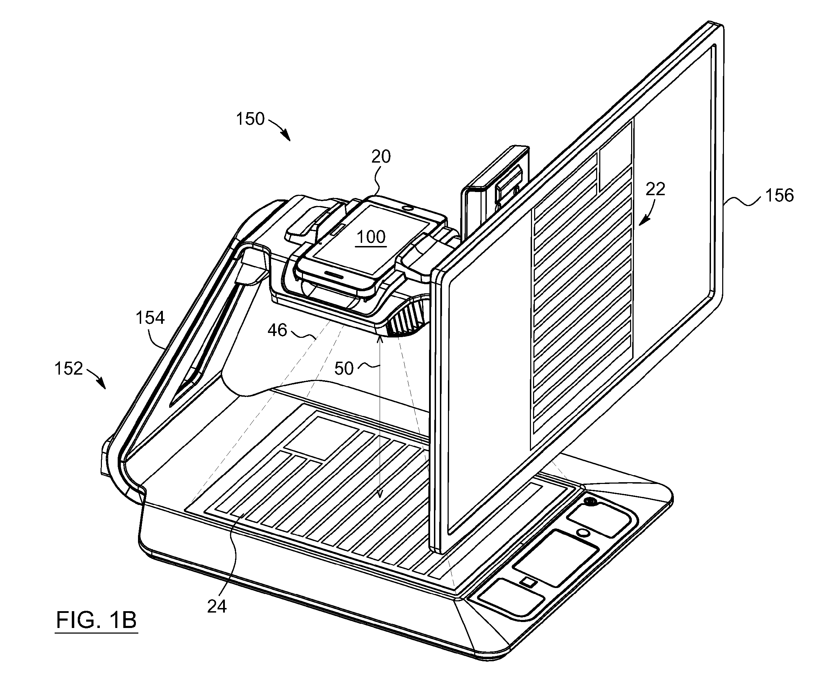

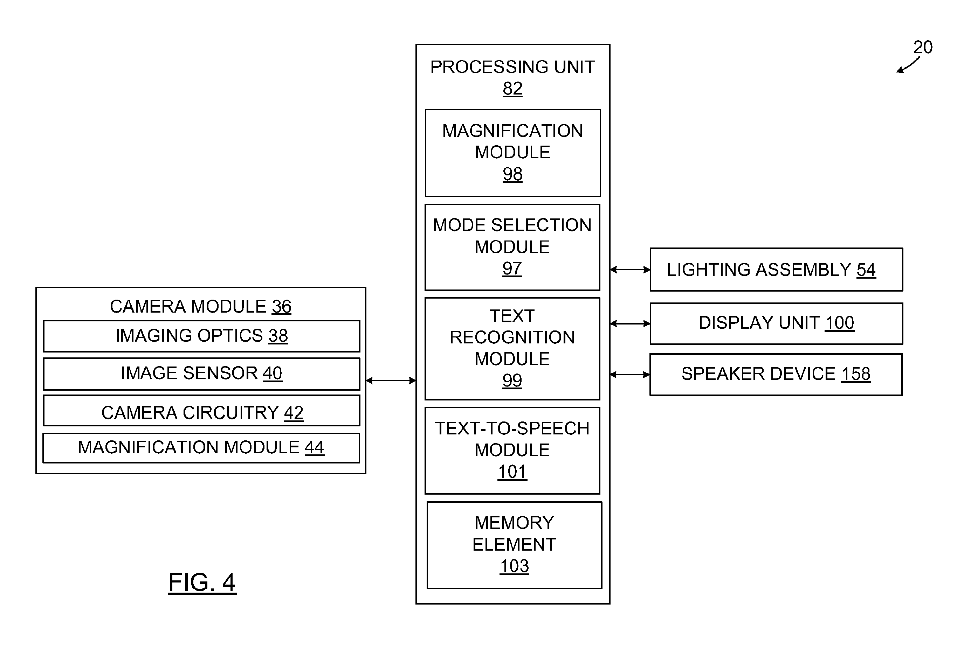

Referring to FIGs. 1A and 1B, a magnification system 150 according to one embodiment is shown. Broadly speaking, the magnification system 150 includes two main components: a handheld device 20 provided with a camera module 36 and a processing unit 82 (see FIG. 4), and a base station 152 having a frame structure 154. Optionally, the handheld device 20 and the base station 152 may respectively include a display unit 100 and a monitor 156. The frame structure includes a cradle 162 for receiving thereto the handheld device 20. The handheld device 20 can function as a stand-alone device and can be carried around for use inside and outside of the home, school or the office or, generally, away from the base station. Alternatively, the handheld device 20 can be mounted on the base station 152 where images of documents or other objects 24 disposed on a workspace 160 of the frame structure 154 can be acquired by the camera module 36 of the handheld device 20 and may be shown on the monitor 156.

Embodiments of the present invention may be particularly useful in any application where it is necessary to provide sight enhancement and magnification to individuals suffering from low vision, other visual impairments, or simply wishing for an enhanced view of an object. While the term "low-vision individuals" is sometimes defined as referring to particular levels of visual acuity one of ordinary skill in the art will understand that the magnification system in accordance with embodiments of invention may be used by any person requiring a device capable of magnifying text, images, physical items and articles, or any other desired features of interest. In some embodiments, the magnification system may be of use to legally blind individuals.

The term "object" is meant to encompass any structure, feature or information of interest whose magnified representation is to be displayed. The object to be magnified may include tri-dimensional structures, handwritten or printed text, images, symbols, graphics and the like. Alternatively or additionally, the object to be magnified may include the hands or another appropriate body part of a person (e.g. the user of the handheld magnification device). It will be understood that in such embodiments, the handheld magnification device may provide a magnified representation of the hands of the user while he or she is performing manual tasks. One of ordinary skill in the art will understand that the terminology "object" is not intended to be limiting.

In the context of stand-alone use of the handheld device by a low-vision person, the object may be embodied by anything encountered by the user during his daily activities such as product labels and price tags at the grocery or other store, bills, restaurant menus, signs, posters, etc. When the handheld device is used in combination with the base station, the object may be anything which may be placed on the workspace of the base station for viewing, as will be better explained below. Typical use can include documents, newspapers, bills, photos, etc. The object is not limited to print or textual objects and can be embodied by a scene or a tri-dimensional structure, for example too small or too far to be properly viewed by the user without visual aid. One skilled in the art will readily understand that the possibilities are limitless.

As used herein, the term "magnification" is understood to refer to the ratio of the image displayed by the handheld magnification device to the size of the object.. In this regard, it should be mentioned that the term "representation" rather than "image" is used herein to refer to the magnified output displayed by the handheld magnification device. In addition to providing an enlarged image of the object, the enlarged image may be further manipulated, formatted, treated, subjected to contrast enhancement or otherwise processed in order to yield the magnified representation of the object.

As known by one of ordinary skill in the art, different types of magnification may be considered, such as optical magnification, digital magnification, and native magnification. The term "optical magnification" is intended to refer herein to the enlargement (or reduction) of the object which is mainly achieved by optical components of the handheld magnification device due to an increase in size of the light beam entering the handheld magnification device. In contrast, the term "digital magnification" refers to a process whereby an input image is digitally (e.g. electronically) magnified, typically by applying a two-dimensional linear scaling with interpolation on the input image or on a portion thereof so as to obtain a digitally magnified image. Furthermore, the term "native magnification" is understood to refer to a process of pixel enlargement, which is the result of the transfer of the image of an object acquired by handheld magnification device on an image sensor thereof having a given pixel size and pitch to the magnified representation of the object displayed by the handheld magnification device on a display having a different (e.g. larger) pixel size and pitch. All these types of magnifications and various combinations thereof are considered within the scope of the present invention.

### Handheld device

Throughout the present description, the term "handheld" is understood to refer to a device that is both small and light enough to be readily held in and operated by one or both hands of a user. Furthermore, the handheld device should be portable, so that it may be easily carried in a pocket, a purse or the like.

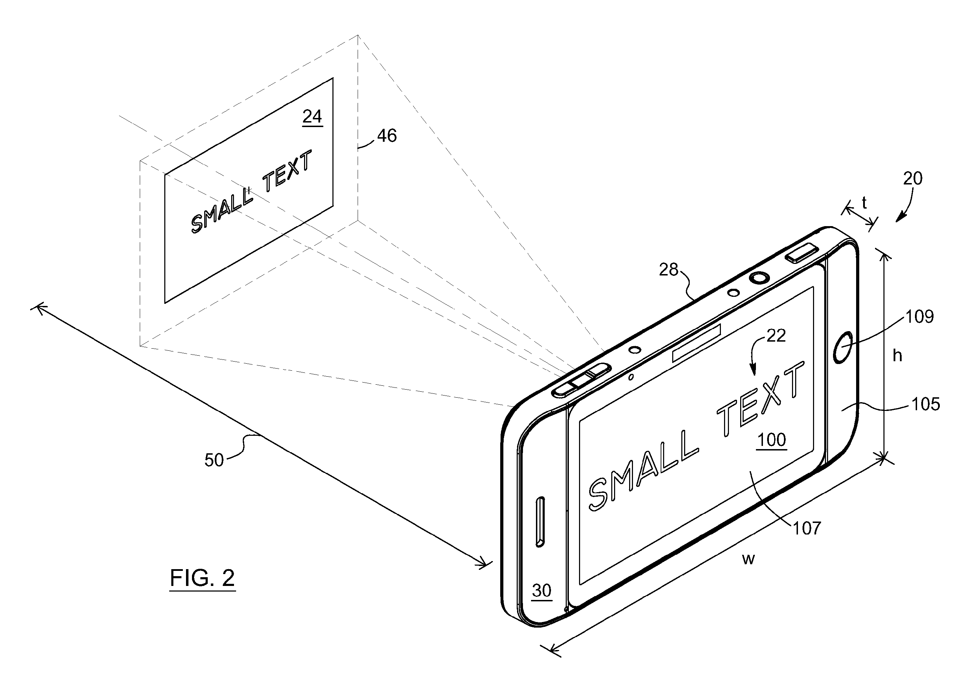

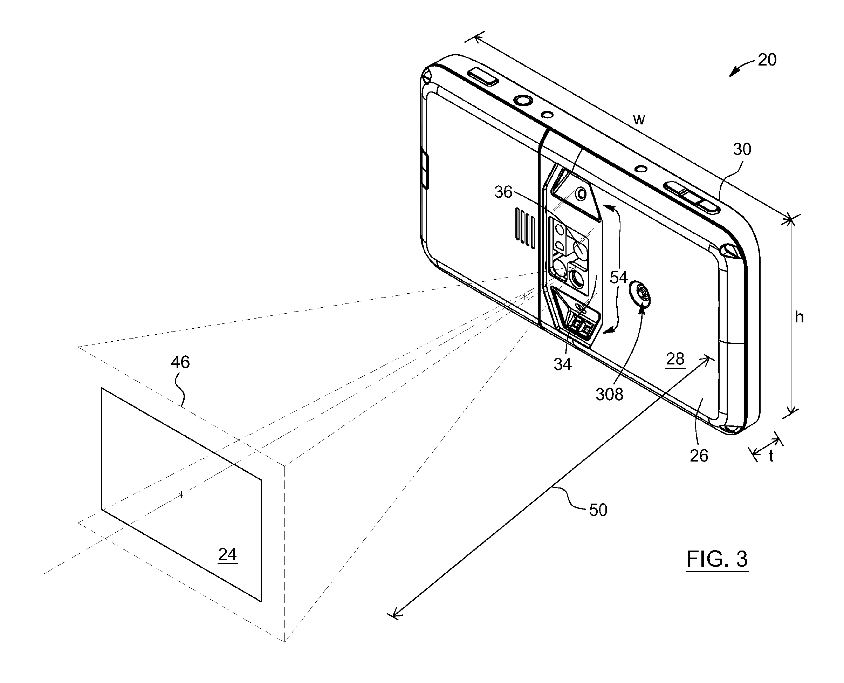

Referring now to FIGs. 2 and 3, there are shown perspective views of a handheld device 20 for use in a magnification system according to an embodiment of the invention.

The handheld device includes a camera module 36 having a field of view 46 and a working range 50, the camera module being adapted to acquire an image of an object 24 which extends within this field of view 46 and working range 50. As used herein, the term "field of view" generally refers to the solid angular extent of a given scene that is imaged by a camera. The term "working range" of a camera refers to the distance interval along the optical axis of the camera within which an object may be located and be resolved into a sufficiently focused image by the camera. In the illustrated embodiment, the object 24 is embodied by a sheet of paper having text printed thereon. However, as mentioned above, the object 24 to be magnified may include any feature of interest whose magnified representation is to be displayed. It should also be understood that the elements of the drawings are not necessarily drawn to scale and that the emphasis is instead being placed upon clearly illustrating the principles of operation of the handheld device 20.

In the illustrated embodiment, the handheld device 20 includes a display unit 100 adapted to display the magnified representation 22 of the object. The display unit 100 preferably uses liquid crystal display (LCD), although any other appropriate display technology such as light-emitting diode (LED) technology, organic LED (OLED) technology, plasma display panel (PDP) technology, light-emitting polymer display (LPD) technology or active-matrix OLED (AMOLED) technology may be used in other embodiments without departing from the scope of the invention.

In some embodiments the display unit 100 may further provide an input interface 105 that accepts input from a user based on haptic and/or tactile contact. In such embodiments, the display unit 100 typically defines, on at least a portion thereof, a touchscreen 107 including a touch-sensitive surface. Preferably, the touchscreen 107 is responsive to a pan gesture, to a swipe gesture, to a tap gesture, and to a pinch-and-zoom gesture. In some embodiments, the user interface 105 of the handheld device 20 may also contain at least one control button 109 to allow a user to control the handheld device 20.

In one exemplary embodiment, the display unit 100 is a touchscreen liquid crystal display. In other embodiments, a separate user interface (not shown) may be provided such that the display unit 100 only serves as an output device. In yet another embodiment the handheld device 20 may not include a display unit 100 at all, and may be connectable to a separate portable display device or may be used to acquire images of an object on the go without any viewing capacity, and the magnified representation of the object may be stored and viewed at a later time when the handheld device is received in the cradle of the base station. In yet another embodiment, for example for use by the legally blind, no display needs to be provided, and the magnified representation of the object is outputted in a text-to-speech format either from the handheld device or the base station.

Still referring to FIGs. 2 and 3, the handheld device may further include a lighting assembly 54 configured to project light within the field of view thereof for illuminating the object. The lighting assembly 54 may be used to provide flash illumination to the object 24 whose still image is to be acquired by the camera module 36. Additionally or alternatively, the lighting assembly 54 may be used for illuminating the object 24 while acquiring video images thereof as well as for autofocus operation of the camera module 36.

In the illustrated embodiment, the handheld device 20 includes a casing 26 having a camera face 28 for pointing toward the object 24 and a display face 30 opposite to the camera face 28 presenting the display unit 100. It will be understood that the casing 26 defines the overall shape of the handheld device 20, and houses, supports and protects various components of the handheld device 20, which will be described in further detail below. One of ordinary skill in the art will also understand that in use, the camera face 28 should be directed toward the object 24, while the display face 30 should be directed toward a user.

The casing 26 may be generally shaped as a rectangular prism of width w, height *h,* and thickness *t,* and may include rounded corners for easy holding and handling of the handheld device 20. Preferably, the casing 26 has an ergonomic shape to facilitate grasping and holding of the handheld device 20. In some embodiments, the casing 26 may be provided with a handle for gripping by a user. The width *w,* height *h* and thickness *t,* may be selected so as be between about 80 and 200 millimeters, 50 and 150 millimeters, and 5 and 30 millimeters, respectively. For example, in the illustrated embodiment, *w* = 160 millimeters, *h* = 87 millimeters and *t* = 16.5 millimeters. However, it is to be understood that these dimensions are given for purposes of illustration only and are not to be construed as limiting. Furthermore, it will also be understood that in other embodiments, the casing 26 may assume a variety of shapes other than rectangular (e.g. circular, semi-circular, square, elliptical, oval, or trapezoidal) and both or either of the camera and display faces 28 and 30 may have a shape, structure or texture differing from a smooth flat surface without departing from the scope of the invention.

As depicted in FIGs. 2 and 3, the height *h* and width *w* of the casing 26 define the geometrical dimensions of the camera 28 and display 30 faces thereof. It will be understood that the width-to-thickness and height-to-thickness ratio is preferably large, so as to ensure that the handheld device 20 has a large enough display face 30 while remaining sufficiently thin for ease of holding by a user.

The camera face 28 of the casing 26 preferably consists of a thin rectangular shell 32 made of lightweight yet strong material, for example a molded plastic shell. Optionally, the camera face further includes a transparent window 34 (e.g. a glass window or a hard plastic window) that protects various exposed components of the handheld device 20 and allows images of the object 24 to be acquired by letting optical radiation (e.g. light) from the object 24 pass therethrough.

Referring to FIG. 4, there is a shown a schematic functional block diagram of a handheld device 20 in accordance with an embodiment of the present invention, including a camera module 36 and a processing unit 82.

Throughout the present description, the term "camera module" refers to any device or component capable of acquiring an image of an object of interest. In the illustrated embodiment, the camera module 36 includes imaging optics 38, an image sensor 40, camera circuitry 42 and a magnification module 44.

As used herein, the term "imaging optics" is understood to refer to one or several optical components adapted to collectively project or direct optical radiation from an object in a scene onto a detector (e.g. an image sensor). Imaging optics 38 according to embodiments of the present invention may include one or several lenses, as well as optical components other than lenses (e.g. mirrors, filters, polarizers and the like). In particular, lenses are not limited to transparent refractive optical components but may also include diffractive, reflective optical components and a combination thereof.

The imaging optics 38 may provide optical magnification of the image that is projected onto the image sensor 40. In such embodiments, the magnified representation of the object is thus generated, at least partly, by an optical magnification thereof. In some embodiments, the imaging optics 38 of the camera module 36 may be able to provide an optical magnification of the object of about between 1x and 5x in some embodiments, between about 1x and 10x in other embodiments, between about 1x and 22x in yet other embodiments.

The image sensor 40 may be embodied by any photosensitive device able to detect optical radiation emitted or reflected by an object and use it to generate an image of the object based on the detected optical radiation. In some embodiments, the image sensors 40 is adapted to receive optical radiation from the object, projected through the imaging optics 38, and converts it into electrical data representing an image of the object. More particularly, the image sensor 40 may be composed of a linear or two-dimensional array of light-sensitive elements (i.e. pixels), the number of which defines the resolution of the camera. The image sensor 40 is preferably embodied by charge-coupled device (CCD) or complementary metal-oxide-semiconductor (CMOS) pixel sensors, but other types of image sensors (e.g. charge injection devices or photo diode arrays) could be used without departing from the scope of the present invention.

The camera module 36 is preferably a high resolution digital camera, although lower resolution cameras or non-digital devices may be used without departing from the scope of the present invention. In some embodiments, the camera module 36 may include two or more distinct cameras, such that one camera has a working range adapted for providing images of objects located near the handheld device, while the other camera has a working range that permits image acquisition of objects located farther from the handheld magnification device. Some of these embodiments preferably allow toggling between the two cameras in a manner that is transparent and seamless to a user. An example of such a handheld device is described in U.S. patent application serial number 13/724.964 entitled "Handheld magnification device with a two-camera module", filed on December 21, 2012.

In some embodiments of the invention, the camera module 36 may have a resolution of at least 5 megapixels. For example, in one embodiment, the camera module 36 has a resolution of 8 megapixels corresponding to an array size of 3264 x 2448 pixels. In addition, since light received by the imaging optics 38 is projected on the image sensor 40, the shape of the field of view 46 of the camera module 36 as a whole is generally defined or limited by the shape of the image sensor 40. However, in some embodiments, the shape of the field of view 46 may be defined or limited by the imaging optics 38. In FIG. 1B, the field of view 46 is rectangular, but in other embodiments, it may be square, circular, elliptical, or another shape.

The term "camera circuitry" is understood to refer herein to electronic components within the camera module 36 which receive the electrical data representing the image of the object from the image sensor 40, and process this image in a usable format. It will be understood by one of ordinary skill in the art that, in practice, the camera circuitry 42 may include a plurality of modules, components, communication ports, software and the like cooperating together in order to process the image of the object received from the image sensor 40. It will be further understood that these elements of the camera circuitry 42 may be provided internally or externally to the camera module 36, and may completely or partially be integrated in a separate processing unit, as will be described below, without departing from the scope of the present invention.

In some embodiments, the camera module 36 may include a magnification module 44 for generating the magnified representation of the object based on a digital magnification thereof. As understood by one of ordinary skill in the art, such interpolation generally involves digitally creating pixels of the digitally magnified image in order to reach higher magnifications. Various interpolation or scaling algorithms may be used in the process, including but not limited to, bilinear and bicubic interpolation algorithms.

In the present description, the term "processing unit" is understood to refer to a functional entity of the handheld device 20 that controls and executes, at least partially, the operations required for displaying the magnified representation of the object based on the image acquired by the cameras module 36. In particular, as illustrated in FIG. 4, the processing unit 82 is preferably connected to the various other elements of the handheld device 20 via various input/output (I/O) communication ports, such as camera ports, inter-integrated circuit (I2C) ports, serial peripheral interface (SPI) ports, display ports, and interfaces such as a parallel interface, a low voltage difference signaling (LVDS) interface or a mobile industry processor interface (MIPI).

It will be understood by one of ordinary skill in the art that the processing unit 82 may be implemented as a single unit or a plurality of interconnected processing sub-units and may be embodied by a microprocessor, a central processing unit (CPU), a processing core, a microcontroller, a system on a chip (SoC), a digital signal processor (DSP), a programmable logic device, or by any other processing resource or any combination of such processing resources configured to operate collectively as a processing unit. In particular, this terminology should not be construed so as to limit the scope or application of the invention.

The processing unit 82 according to embodiments of the handheld device 20 will be described below as a series of various modules, each associated with one or more different functions. It will be readily understood by one of ordinary skill in the art that, in practice, each module may include a plurality of sub-modules, routines, components, communication ports, software and the like cooperating together in order to accomplish the corresponding function. It will be further understood that the subdivision into such modules is made from a conceptual standpoint only and that, in practice, a given hardware or software component may be shared by different modules, and that components of different modules may be combined together physically and logically without departing from the scope of the present invention. Preferably, the various physical components of the processing unit 82 and the interconnections therebetween are disposed on an integrated circuit (IC) die, which is mounted onto a printed circuit board (PCB).

Still referring to FIG. 4, the processing unit 82 may include a magnification module 98 for generating the magnified representation of the object based on a digital magnification thereof. It will be understood by one of ordinary skill in the art that the magnification module 98 of the processing unit 82 may, but need not, be identical to the magnification module 44 that may be provided with the camera module 36, and may operate according to the same digital magnification principle as explained above. Hence, in embodiments such as that shown in FIG. 4, the camera module 36 and the processing unit 82 both include a respective magnification module 44 and 98, which may be used jointly in order to display the magnified representation of the object at higher digital magnification level. However, it will also be understood that only one magnification module 44 or 98 may be provided, or none at all if the magnification is performed in a purely optical fashion and/or by relying on native magnification achieved via either the display unit of the handheld device or the monitor of the base station.

Depending on the intended application, the handheld device may be operated to output the magnified representation according to one or more operation modes. Optionally, the processing unit 82 may include a mode selection module 97 for switching between the different operation modes.

In one embodiment, the handheld device may be operated in a live mode, wherein the magnified representation is outputted as a real-time video stream, preferably at a frame rate of at least 30 frames per second.

Alternatively or additionally, the handheld device could also be operated in an image capture mode, wherein the magnified representation is outputted as a still view of the object.

Furthermore, the handheld device could also be operated in a text overlay mode. In this mode, textual information contained in the image of the object is recognized and converted to machine-encoded text by the text recognition module 99 of the processing unit 82. The magnified representation of the object is outputted as a still view of the object on which is overlaid machine-encoded text, preferably in vector format, which replaces portions of the object provided with textual information.

In addition, the handheld device could be also operated in a text-to-speech mode, whereby textual information contained in the image acquired by the camera module is converted to machine-encoded text and further converted to a speech output by a text-to-speech module 101 of the processing unit 82. In this embodiment the handheld device 20, the base station 152 or both may include a speaker device 158 in communication with the processing unit for outputting the speech output.

The processing unit 82 may also include a memory element 103 for storing the magnified representation of the object and allows a user to retrieve it at a later time.

### Base station

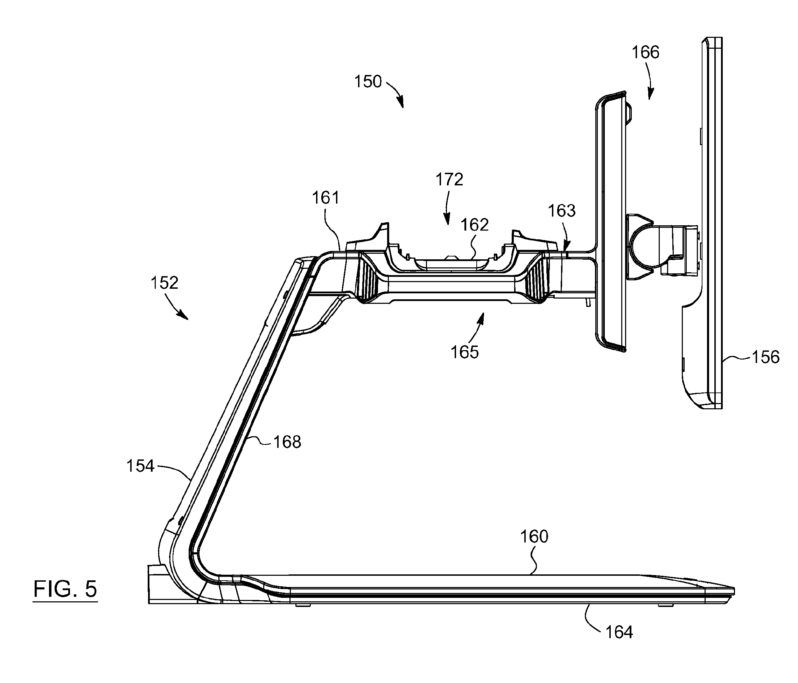

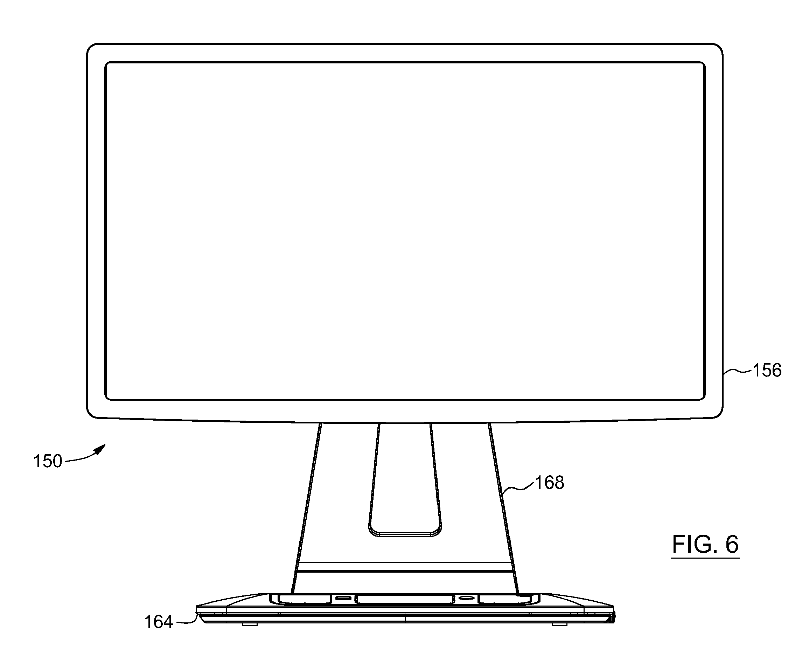

Referring back to FIGs. 1A and 1B, and with further reference to FIGs. 5 and 6, there is shown a magnification system 150 having a base station 152 according to an embodiment of the invention.

As mentioned above, the base station 152 includes a frame structure 154 and, optionally, a monitor 156. The frame structure 154 defines a workspace 160, and includes a cradle 162 in which the handheld device 20 can be removably received. In the illustrated embodiment, the cradle 162 is part of a docking assembly 172 facilitating the positioning and securing of the handheld device 20 in position. The docking assembly 172 will be described in further detail below. In addition, in FIG. 1A, the docking assembly 172 is part of a bridge member 165 of the frame structure 154, which extends substantially horizontally above the workspace 160. As best seen from FIG. 1B, the cradle 162 is positioned and configured so that the workspace 160 is within the field of view 46 and the working range 50 of the camera module 36 of the handheld device 20 when the handheld device 20 is received in the cradle 162. In the illustrated embodiment the cradle 162 is disposed above the workspace 160, but in other embodiments it could be positioned differently, provided that optical components such as mirrors and lenses redirect light from the workspace 160 toward the camera module of the handheld device 20.

In one embodiment of the invention, the frame structure 154 includes a bottom platform 164 adapted to be disposed on a flat surface such as a table, desk, counter, or the like, a mast 168 extending substantially upwardly from the bottom platform 164 and the bridge 165 extending substantially from a top end of the mast 168 and supporting the cradle 162 above the bottom platform 164 at a predetermined distance therefrom. In this embodiment, the bridge 165 has a first extremity 161 connected to the mast 168 and a second extremity 163 to which is affixed a monitor support 166, as will be described in more detail further below.

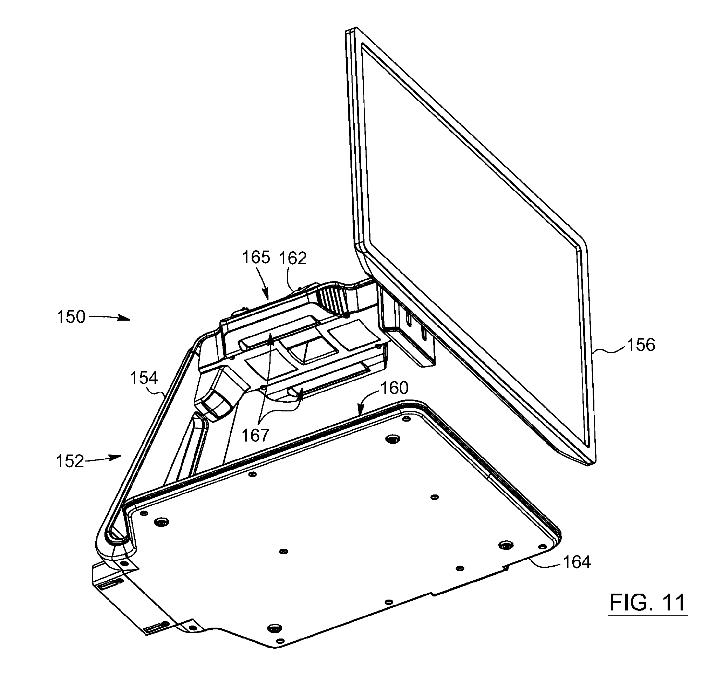

Components of the frame structure 154 are preferably made of a rigid material of sufficient sturdiness to support the handheld device 20 and monitor 156 and to resist to frequent interactions with a user. For example, in a preferred embodiment, the frame structure 154 primarily consists of a lightweight aluminum structure, but in other embodiments, the frame structure may be made of steel or another suitable metal or alloy without departing from the scope of the present invention. Optionally, the frame structure may include a lighting assembly 167 for illuminating the workspace 160, as best seen in FIG. 11. The lighting assembly 167 preferably provides enough light to maximize the dynamic range of the image sensor when the handheld device is received in the cradle 162 by using the minimum amount of gain to minimize the noise.

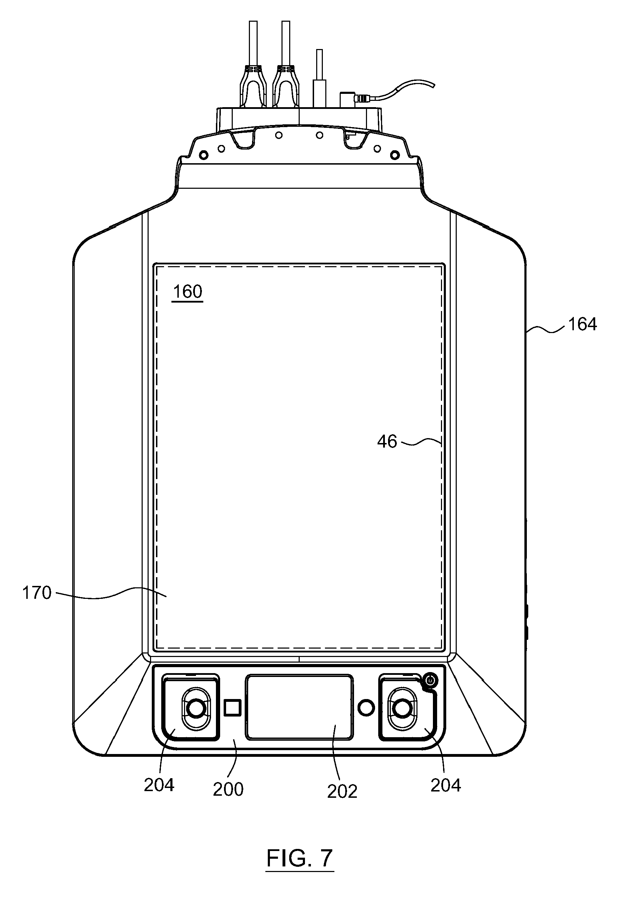

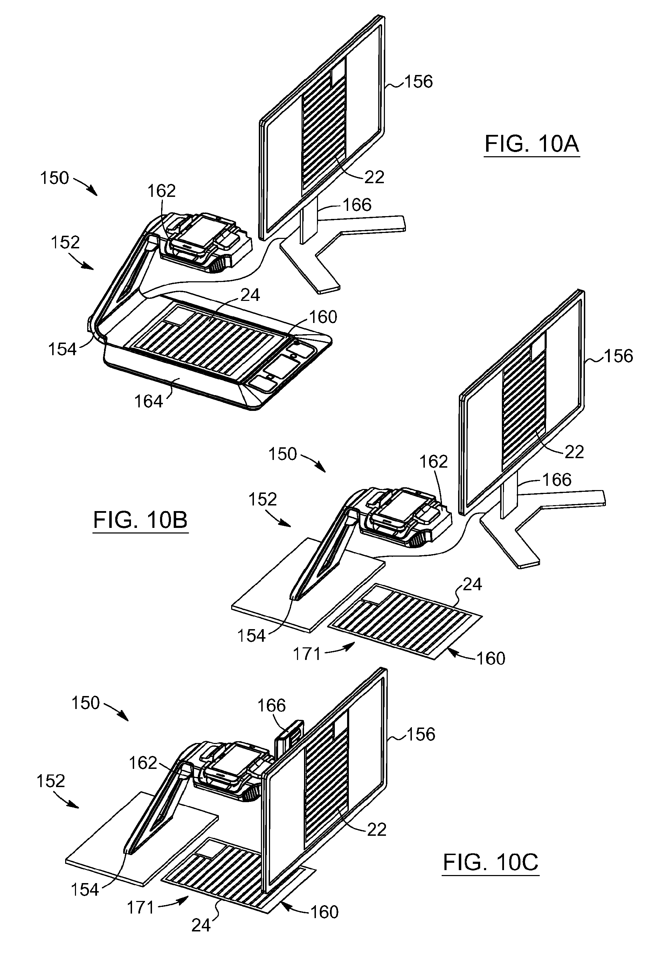

Referring to FIG. 7, an exemplary embodiment of the bottom platform 164 is shown in more detail. The bottom platform 164 is shown as having a rectangular shape, but one skilled on the art will readily understand that other shapes could be considered without departing from the scope of the present invention. A region of the bottom platform 164 on which an object for viewing can be disposed preferably defines the workspace 160. As such, the workspace 160 can be said to coincide, at least partly, with the intersection plane between the bottom platform 164 and the field of view 46 of the camera module of the handheld device 20 when the handheld device is received in the cradle. The workspace 160 may however have larger or smaller dimensions than this intersection plane without departing from the scope of the present invention. The region of the bottom platform 164 defining the workspace 160 may be identified as such though markings on a surface of the bottom platform 164 or by providing thereon a plate 170 made of a material different from the remainder of the frame structure such as plastic, glass, rubber, etc. In some embodiments, the entire bottom platform 164 may define the workspace 160. In other embodiments the frame structure 154 may form an open area 171 below the cradle 162 defining the workspace 160, such that the object 24 to be viewed rests on the flat surface on which the base station 152 is supported, as illustrated in FIGs. 10B and 10C.

The surface of the workspace 160 intersecting with the field of view 46 of the camera module preferably has dimensions suitable to receive typical objects users may wish to obtain a magnified representation thereof in their entirety, or over a substantial portion thereof. In one embodiment of the invention, the workspace 160 may have a width and a length of approximately 210 mm and 280 mm respectively. In other embodiments, the workspace 160 may have a width and a length similar or greater to standard paper sizes such as Letter (215.9 mm x 279.4 mm), A3 (297 mm x 420 mm), A4 (210 mm x 297 mm), A5 (148 mm x 210 mm), and the like.

Still referring to FIG. 7, the frame structure 154 further preferably includes a user interface 200. In the illustrated embodiment the user interface is shown adjacent the workspace 160 on the bottom platform 164, at a position easily accessible to the user, but one skilled in the art will readily understand that the user interface could be provided at a different location without departing from the scope of the invention. For example, the user interface may be provided on a remote control connected directly or wirelessly to the frame structure. The user interface 200 is preferably in communication with the processing unit of the handheld device when the handheld device is received in the cradle and/or with another processing unit provided in the base station, to allow a user to act on the magnified representation of the object. The communication between the processing unit and user interface can be accomplished through a wired connection or wirelessly. In one embodiment, communication wires are hidden within the frame structure such they cannot be seem from the exterior, to improve the aesthetics of the magnification system.

In one embodiment, the user interface includes a touchpad 202. The touchpad 202 may be embodied by any suitable technology and may be responsive to typical touch commands such as a pan gesture, a swipe gesture, a tap gesture and a pinch-and-zoom gesture. The user interface 200 may further or alternatively includes at least one control button 204. In the illustrated embodiment two such control buttons 204a, 204b are shown proximate the touchpad 202, on either sides thereof. In this example, control buttons 204a and 204b are used as a shutter key and a back key, respectively, but other functions may additionally or alternatively be provided in other embodiments. Moreover, in other embodiments, additional control buttons, one or more scroll wheels, track balls and four-arrow keys, or a combination thereof, may also be used to allow the user to control the magnification system.

Referring back to FIGs. 1A and 1B, the cradle 162 may have any shape, structure and functionalities suitable to support and hold the handheld device 20 in position above the workspace 160. As mentioned above, in one embodiment, the cradle 162 is part of a docking assembly 172 facilitating the positioning and securing of the handheld device 20 in position. An example of such a docking assembly is shown in U.S. patent application serial number 13/724.816 entitled "Docking assembly for a handheld device", filed on December 21, 2012. It will however be understood that this example is given by way of illustration only and that the cradle 162 and/or docking assembly 172 may be embodied by a variety of structures without departing from the scope of the present invention. For example, in one embodiment, the docking assembly 172 may be pivotally mounted onto the frame structure 154. In this embodiment, when the handheld device is docked to the docking assembly, the docking assembly 172 can be pivoted with respect to the frame structure 154 so as to allow the camera module of the handheld device 20 to acquire images of an object located outside of the workspace defined by the frame structure.

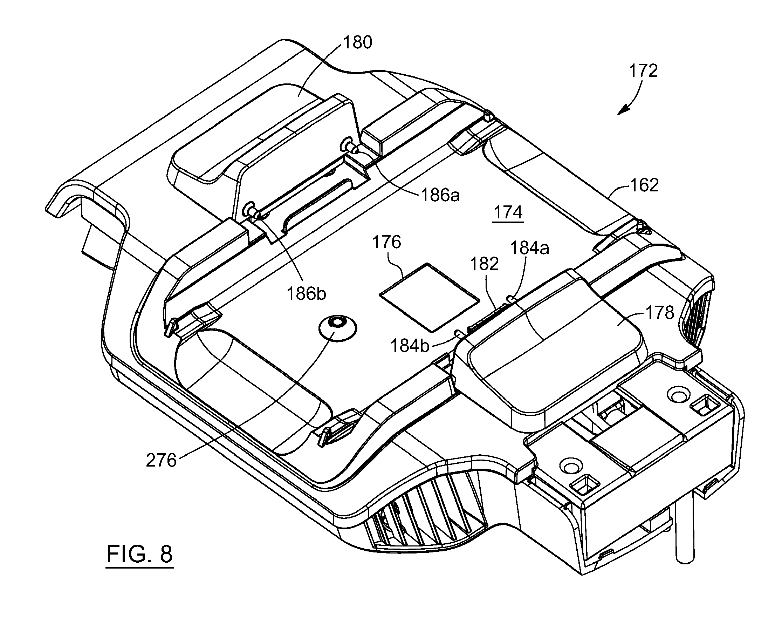

Referring to FIG. 8, there is shown an example of a docking assembly 172 including a cradle 162 according to one embodiment of the invention. In this embodiment, the cradle 162 has a substantially rectangular shape matching at least substantially the shape of the casing of the handheld device. The cradle 162 may include a bottom wall 174 on which the handheld device may be received and supported. The bottom wall 174 may include a transparent window 176 aligned with the camera module of the handheld device when the handheld device is installed in the cradle 162. The transparent window 176 may be embodied by a sheet made of a transparent material such as glass or plastic, or simply by a hole or aperture bored through the bottom wall 174 of the cradle 162.

The cradle 162 preferably has a shape that substantially matches a shape of the handheld device for receiving the handheld device snugly in the cradle 162 such that engaging the handheld device in the cradle 162 automatically positions the handheld device over the workspace in an operative manner. In such an embodiment the cradle 162 may include an orientation key 276 for properly orienting the handheld device inside the cradle 162 and facilitating the docking of the handheld device to the docking assembly such that they can only be engaged together in one possible orientation of the handheld device. For example, in the illustrated embodiment, the orientation key 276 includes a protrusion extending upwardly from the cradle 162 and engageable in a complimentary recess 308 (see FIG. 3) formed in the handheld device, the protrusion being eccentric with respect to a center of the cradle 162 such that the handheld device may be received in the cradle 162 in only one orientation with respect thereto

Alternatively or additionally, the docking assembly 172 may include any structure, elements or devices facilitating or securing the docking of the handheld device in the cradle 162. Still referring to FIG. 8, in the illustrated embodiment the docking assembly 172 includes first and second handles 178 and 180 disposed adjacent to the cradle 162. The first and second handle 178 and 180 are together reciprocally movable inwardly and outwardly relative to the cradle 162, between an open position where they are disengaged from the handheld device, and a closed position where they engage the handheld device.

The first handle 178 may be provided with a handle data connector 182 connectable to a device data connector of the handheld device (not shown). As will be readily understood by one skilled in art, any type of data connection may be used. For example, input/output (I/O) ports of the handle data connector 182 may include, without being limited to, at least one of a high-definition multimedia interface (HDMI) port, a universal serial bus (USB) port, an audio-out port, an inter-integrated circuit (I2C) port, a power interface port, and a digital visual interface (DVI) port, or, generally, any audio, video or communication port. By way of example, the I/O ports may be embodied by FireWire (trademark) or DisplayPort (trademark) ports.

In the illustrated embodiment the first handle 178 is provided with a male-type data connector 182 adapted to engage a female-type connector on the handheld device, but the reverse could also be considered. Furthermore, although the first and second handles 178 and 180 are shown in the illustrated embodiment as extending along the longitudinal side of the handheld device, they may be positioned on the transversal sides thereof without departing from the scope of the present invention. In another embodiment, a single handle may be provided, on either one of the sides of the handheld device.

Still referring to FIG. 8, in one embodiment the first handle 178 is provided with a pair of alignment projections 184a, 184b disposed on opposite sides of the handle data connector 182. The alignment pins 184a, 184b are engageable with corresponding alignment cavities on one side of the handheld device (not shown) such that as the handles are moved inwardly from the open position to the closed position, the alignment projections 184a, 184b progressively engage the alignment cavities in order to guide the handle data connector 182 toward the device data connector of the handheld device until a connection therebetween is established. In an alternative embodiment the alignment projections could be provided on the handheld device and the alignment cavities on the handle without departing from the scope of the present invention. The matching alignment projections 184 and alignment cavities may be embodied by complimentary structures of different shapes such as pins, protrusions, protuberances, ribs, ridges, tabs, knobs, bulges and the like on the one hand and grooves, depressions, holes, nooks, indentations, recesses, slots, slits, openings, apertures, and the like on the other hand. Optionally, the second handle 180 and the other side of the handheld device may also be provided with one or more matching sets of alignment projections 186a and 186b and alignment cavities or the like. Also optionally, a biasing element (not shown) including a spring such as a compression, a tension or a torsion spring or a combination thereof, or by another suitable elastic element capable of storing mechanical energy could be provided to bias the handles 178 and 180 in the closed or the open position.

It will be readily understood that the first and second handles described above may be replaced by any other suitable mechanism or structure. For example, the data connector may be provided on another movable structure or onto a fixed wall adjacent the cradle. Also, optionally, a securing element (not shown) of a suitable type such as mechanical, magnetic, electric, or the like may be provided to secure the handheld device in the cradle 162.

In another embodiment, the frame structure may include neither a first handle nor a docking assembly, but may be provided with a data connector connectable to a device data connector of the handheld device. In such an embodiment, the user could need to manually insert the data connector into the device data connector of the handheld device to establish a data connection between the handheld device and the base station. In yet another embodiment, data connection between the handheld device and base station may be provided wirelessly. In such embodiments, the cradle may essentially be used for mechanically supporting the handheld device in a manner such that the workspace is within the field of view and the working range of the camera module.

Referring back to FIGs. 1A, 1B, 5 and 6, as mentioned above the magnification system 150 may further preferably include a monitor 156 mounted on the frame structure 154 and adapted to display, via the processing unit of the handheld device 20, the magnified representation of the object. The monitor 156 may be embodied by any type of display technology, such as LCD, LED, OLED, PDP LPD or AMOLED technology. For example, in one embodiment, the monitor 156 uses LCD display technology with LED backlight.

It will be understood herein that the monitor 156 may be in communication with the handheld device 20 such that when the handheld device is received in the cradle 162, as in FIG. 1B, the magnified representation 22 of the object 24 generated by the processing unit of the handheld device 20 is displayed on the monitor 156 of the base station, preferably automatically upon docking the handheld device 20 to the docking assembly. This communication could be provided through a wire connection or wirelessly. In FIG. 1B, when the handheld device 20 is docked to the docking assembly 172 and the magnified representation 22 of the object 24 is displayed on the monitor, the display unit 100 of the handheld device 20 ceases to display the magnified representation of the objet. However, in other embodiments, the display unit 100 of the handheld device 20 may continue to display the magnified representation 22 when the handheld device 20 is docked to the docking assembly 172.

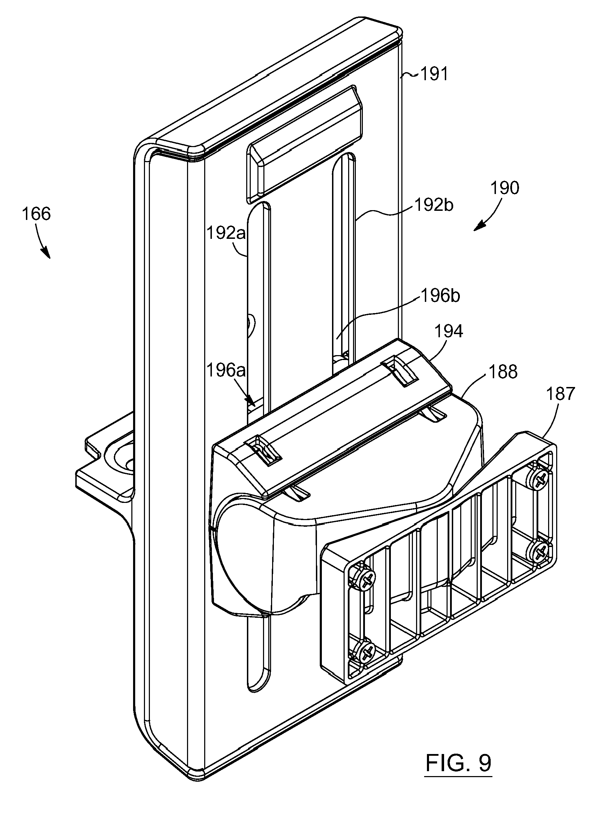

In some of the embodiments wherein a monitor is provided, the base station may include a monitor support for supporting the monitor. Referring to FIG. 9, an example of a monitor support 166 according to one embodiment is shown. Preferably, the monitor support 166 is affixed to the second extremity 163 of the bridge 165, as best seen on FIG. 5. Again, it is understood that the base station 152 may have a different configuration than the one shown in the FIGs. 1A and 1B, and that in other embodiments the monitor support 166 may be secured to a different component of the frame structure 154 or may be provided a stand-alone unit not physically connected to the base station 152, as exemplified in FIGs. 10A and 10B. In some embodiments, the base station 152 is preferably foldable and portable so as to allow a user to easily and conveniently carry the base station from one location to another.

Still referring to FIG. 9, in one embodiment the monitor support 166 includes a monitor brace 187 to which the monitor can be secured though any appropriate securing mechanism such as screws. The monitor brace 187 may alternatively be integral to the monitor itself. The monitor brace 187 is preferably attached to a pivot 188 which allows a pivoting of the monitor brace 187 and monitor thereon about at least one axis. For example, some embodiments provide pivot, tilt, swivel, and height adaptability of the monitor. In some of these embodiments, these adjustment mechanisms may be provided by a telescopic arm. In the illustrated embodiment the pivot 188 provided a pivoting about a horizontal axis, therefore allowing an adjustment of the vertical orientation of the monitor. Alternatively, the pivot may provide a pivoting about a vertical axis or about both vertical and horizontal axes. Any appropriate components such as shafts, bushings, ball joints or the like may be provided in order to accomplish this pivoting.

Still referring to FIG. 9, the monitor support 166 may also include a height adjustment mechanism 190 allowing an adjustment of the height of the monitor. In the illustrated embodiment, the height adjustment mechanism 190 includes panel 191 in which are provided a pair of slots 192a and 192b extending vertically and in parallel. The height adjustment mechanism 190 also includes a sliding member 194 from which projects a pair of tabs 196a and 196b respectively engaged in the slots 192a, 192b. The sliding member 194 can slide up and down with the tabs similarly 196a, 196b sliding in the slots 192a, 192, and any appropriate mechanism (not shown) can be used to secure the sliding member 194 in place when the desired position has been reached. In the illustrated embodiment, the panel 191 of the monitor support 166 is shown affixed to the second extremity of the bridge whereas the sliding member 194 is affixed to the height adjustment mechanism 190 and therefore on the side of the monitor, but the opposite configuration could be considered as well.

It will be readily understood that the monitor support may house and/or hide any wire providing data or an electrical connection to the monitor.

Of course, numerous modifications could be made to the embodiments above without departing from the scope of the present invention as defined in the appended claims.

## Claims

1. A magnification system comprising:
- a handheld device comprising:
o a camera module having a field of view and a working range, the camera module being adapted to acquire an image of an object within said field of view and working range; and
o a processing unit for generating a magnified representation of the object based on the image thereof acquired by said camera module; and
- a base station comprising a frame structure defining a workspace and comprising a cradle for removably receiving therein the handheld device, the cradle being positioned and configured so that the workspace is within the field of view and the working range of the camera module when the handheld device is received in the cradle.

2. The magnification system according to claim 1, wherein the base station further comprises a monitor mounted on the frame structure and adapted to display, via the processing unit of the handheld device, the magnified representation of the object, and/or the handheld device comprises a display unit adapted to display the magnified representation of the object, such as a touchscreen liquid crystal display.

3. The magnification system according to claim 1 or 2, wherein the handheld device is operable in a live magnification mode wherein the magnified representation is outputted in a real-time video stream, the processing unit being preferably adapted to output the real-time video stream at a frame rate of at least 30 frames per second.

4. The magnification system according to any one of claims 1 to 3, wherein the handheld device is operable in an image capture mode wherein the magnified representation is outputted as a still view of the object.

5. The magnification system according to any one of claims, 1 to 4 wherein the handheld device is operable in a text overlay mode whereby textual information contained in the image of the object acquired by the camera module is recognized and converted to machine-encoded text by a text recognition module of the processing unit, and wherein the magnified representation is outputted as a still view of the object on which is overlaid the machine-encoded text.

6. The magnification system of claim 5, wherein the handheld device is operable in a text-to-speech mode, the processing unit further comprises a text-to-speech module for converting the machine-encoded text rendered by the text recognition module to a speech output, and at least one of the handheld device and the base station comprises a speaker device for outputting the speech output.

7. The magnification system according to any one of claims 1 to 6, wherein the processing unit comprises a memory element for storing the magnified representation of the object.

8. The magnification system according to any one of claims 1 to 7, wherein the frame structure comprises a user interface adjacent the workspace, the user interface being in communication with the processing unit when the handheld device is received in the cradle to allow a user to act on the magnified representation of the object.

9. The magnification system according to claim 8, wherein the user interface of the frame structure comprises at least one of:
- a touchpad responsive to a pan gesture, to a swipe gesture, to a tap gesture, and to a pinch-and-zoom gesture; and
- at least one control button.

10. The magnification system according to any one of claims 1 to 9, wherein the frame structure comprises a lighting assembly for illuminating the workspace.

11. The magnification system according to any one of claims 1 to 10, wherein the cradle is disposed above the workspace.

12. The magnification system according to any one of claims 1 to 11, wherein the handheld device comprises a user interface in communication with the processing unit to allow a user to act on the magnified representation of the object.

13. The magnification system according to claim 12, wherein the user interface of the handheld device comprises at least one of:
- a touchscreen responsive to a pan gesture, to a swipe gesture, to a tap gesture, and to a pinch-and-zoom gesture; and
- at least one control button.

14. The magnification system according to any one of claims 1 to 13, wherein the handheld device further comprises a lighting assembly configured to project light within the field of view thereof for illuminating the object.

15. The magnification system according to any one of claims 1 to 14, wherein the magnified representation of the object is obtained from at least one of:
- an optical magnification performed by the camera module;
- a digital magnification performed by at least one of the camera module and the processing unit;
- a native magnification achieved via the monitor of the base station or the display unit of the handheld device.
